# EUROPÄISCHE PATENTSCHRIFT

(11) **EP 0 429 911 B1**
(45) Veröffentlichungstag und Bekanntmachung des Hinweises auf die Patenterteilung: **20.03.1996**
(21) Anmeldenummer: 90121389.2
(22) Anmeldetag: 08.11.1990
(51) Int. Cl.: B32B 27/06, B32B 31/30

(54) **Verfahren zum Herstellen einer Folie und danach hergestellte Folie**
Method for manufacturing a foil
Procédé de fabrication d'une feuille

(30) Priorität: 23.11.1989 DE 3938808
(43) Veröffentlichungstag der Anmeldung: 05.06.1991
(73) Patentinhaber: 4P Folie Forchheim GmbH, D-91299 Forchheim (DE)
(72) Erfinder: Müller, Josef, W-8557 Eggolsheim (DE); Neudecker, Alfred, W-8550 Forchheim (DE)
(74) Vertreter: Hutzelmann, Gerhard

(56) Entgegenhaltungen:
- EP-A- 0 216 300
- EP-A- 0 291 012
- DE-A- 3 513 526

## Beschreibung

Die Erfindung bezieht sich auf ein Verfahren zum Herstellen einer Folie, die an wenigstens einer Seite mit einer Silikonschicht versehen ist und auf eine danach hergestellte Folie.

Beim Herstellen derartiger Folien stellen sich erhebliche Schwierigkeiten ein, sobald die Silikonschicht zur Kennzeichnung eingefärbt werden soll. Zum Einen ist es nicht möglich, in die nur ca. 0,5µm dicke Silikonschicht eine zur deutlichen Kennzeichnung notwendige Farbpigmentmenge einzubringen und zum Anderen beeinträchtigen die Farbpigmente die Aushärtung der Silikonschicht, wodurch die Dehäsiveigenschaften der Silikonschicht negativ beeinflußt werden..

Der Erfindung liegt die Aufgabe zugrunde, ein Verfahren zum Herstellen einer mit einer Silikonschicht ausgerüsteten Folie vorzuschlagen, mit dem die genannten Nachteile vermieden werden.

Diese Aufgabe wird erfindungsgemäß dadurch gelöst, daß die Folie im Coextrusionsverfahren hergestellt wird und wenigstens drei Schichten aufweist, von denen eine Außenschicht aus Silikon besteht, unter der eine eingefärbte Zwischenschicht angeordnet wird, auf deren von der Silikonschicht abgewandten Seite eine vorzugsweise weiß eingefärbte weitere Schicht angeordnet wird.

Damit ist eine Einfärbung der silikonisierten Folie erreicht, ohne die Nachteile der direkten Einfärbung hinnehmen zu müssen.

Als sehr vorteilhaft hat sich auch erwiesen, wenn erfindungsgemäß beiderseits der vorzugsweise deckend weiß eingefärbten Schicht, die zur Verbesserung der Wärmebeständigkeit und der Zugbelastung aus HDPE, PP oder anderen geeignete Rohstoffen bestehen kann, eine eingefärbte Zwischenschicht vorgesehen wird, die jeweils auf ihrer Außenseite durch eine Silikonschicht abgedeckt wird.

Auch bei beidseitiger Silikonisierung der Folie läßt sich so eine einfache Farbkennzeichnung erreichen.

Dabei ist es sehr vorteilhaft, wenn gemäß der Erfindung die beiden Zwischenschichten unterschiedlich eingefärbt sind und die beiden Außenschichten Silikon mit unterschiedlichen Eigenschaften enthalten.

Durch die unterschiedliche Einfärbung lassen sich Silikonschichten mit unterschiedlichen Eigenschaften oder Dicken kennzeichnen.

Sehr vorteilhaft kann es auch sein, wenn gemäß einer weiteren Ausgestaltung der Erfindung die Zwischenschicht bedruckt wird.

Damit lassen sich Informationen z.B. über die Verwendbarkeit, die Eigenschaften oder dergleichen anbringen, ohne daß die Druckfarbe die Silikonschicht selbst beeinflußt.

Eine coextrudierte Folie mit wenigstens einer Silikon-Außenschicht ist erfindungsgemäß dadurch gekennzeichnet, daß wenigstens drei Schichten vorgesehen sind, von denen die Außenschicht aus Silikon besteht, an die eine Zwischenschicht anschließt, die eingefärbt ist und an deren von der Silikonschicht abgewandten Seite eine weitere, weiß eingefärbte Schicht angeordnet ist.

Weiterhin ist es sehr vorteilhaft, wenn gemäß der Erfindung beiderseits der weiß eingefärbten Schicht(Mittelschicht) unterschiedlich eingefärbte Zwischenschichten angeordnet sind, an die Silikonschichten mit unterschiedlichen Eigenschaften anschließen.

In der Zeichnung ist die Erfindung anhand mehrerer Ausführungsbeispiele veranschaulicht. Dabei zeigen:
- Fig.1: einen Schnitt durch eine dreischichtige Folie, mit einer Trägerschicht, einer Zwischenschicht sowie einer Silikonschicht,
- Fig.2: einen Schnitt durch eine fünfschichtige Folie mit unterschiedlich eingefärbten Zwischenschichten und
- Fig.3: einen Schnitt durch eine ebenfalls fünfschichtige Folie, bei der eine Zwischenschicht bedruckt ist.

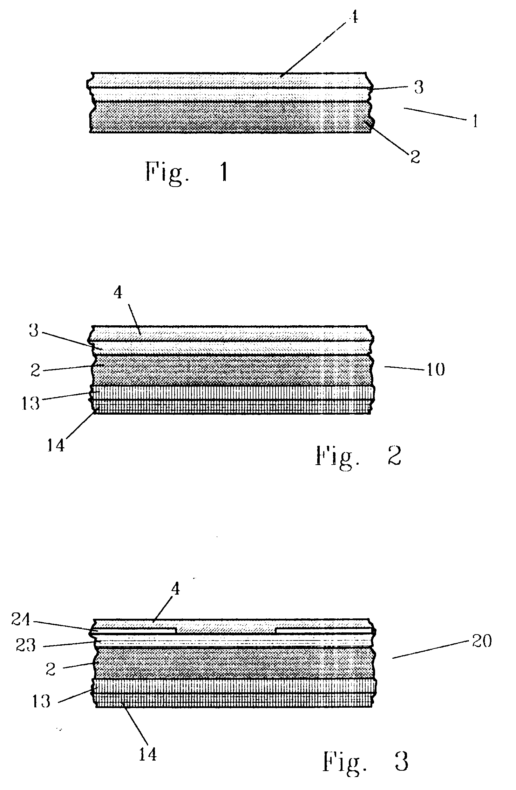

Mit 1 ist in Fig.1 eine coextrudierte Folie bezeichnet, die aus einer Trägerschicht 2, einer Zwischenschicht 3 und einer Silikonschicht 4 besteht. Die Trägerschicht ist weiß eingefärbt, die Zwischenschicht enthält einen davon abweichenden Farbstoff und die Silikonschicht ist farblos. Durch diesen Aufbau ist gewährleistet, daß die die Silikonschicht aufweisende Seite sicher erkannt wird und die Folie seitenrichtig zum Einsatz kommt.

In Fig.2 ist eine fünfschichtige Folie 10 dargestellt, deren Trägerschicht 2 auf beiden Seiten mit je einer Zwischenschicht 3 bzw. 13 verbunden ist, die unterschiedlich eingefärbt sind. Beide Zwischenschichten tragen widerum eine Silikon-Außenschicht 4 bzw. 14, die ihrerseits von einander abweichende Eigenschaften aufweisen. Auch hierbei ist durch die unterschiedliche Einfärbung der Zwischenschichten gewährleistet, daß die unterschiedlichen Silikonschichten nicht verwechselt werden.

Beim Ausführungsbeispiel nach Fig.3 ist die fünfschichtige Folie 20 wieder mit einer weiß eingefärbten Trägerschicht 2 versehen, die beidseitig durch Zwischenschichten 13 bzw. 23 abgedeckt ist. Dabei ist die Zwischenschicht 13 eingefärbt, während die Zwischenschicht 23 mit einem Druckbild 24 versehen wurde. Als Außenlagen sind wieder zwei Silikonschichten 4 bzw. 14 vorgesehen, die auch hierbei unterschiedliche Eigenschaften aufweisen.

## Patentansprüche

1. Verfahren zum Herstellen einer Folie, die an wenigstens einer Seite mit einer Silikonschicht versehen ist, **dadurch gekennzeichnet**, daß die Folie im Coextrusionsverfahren hergestellt wird und wenigstens drei Schichten aufweist, von denen eine Außenschicht aus Silikon besteht, unter der eine eingefärbte Zwischenschicht angeordnet wird, auf deren von der Silikonschicht abgewandten Seite eine vorzugsweise weiß eingefärbte weitere Schicht angeordnet wird.

2. Verfahren nach Anspruch 1, **dadurch gekennzeichnet**, daß beiderseits der vorzugsweise deckend weiß eingefärbten Schicht, die zur Verbesserung der Wärmebeständigkeit und der Zugbelastbarkeit aus HDPE, PP oder anderen geeigneten Rohstoffen bestehen kann, eine eingefärbte Zwischenschicht vorgesehen wird, die jeweils auf ihrer Außenseite durch eine Silikonschicht abgedeckt wird.

3. Verfahren nach Anspruch 2, **dadurch gekennzeichnet**, daß die beiden Zwischenschichten unterschiedlich eingefärbt sind und die beiden Außenschichten Silikon mit unterschiedlichen Eigenschaften enthalten.

4. Verfahren nach einem der Ansprüche 1 bis 3, **dadurch gekennzeichnet**, daß die Zwischenschicht bedruckt wird.

5. Coextrudierte Folie mit wenigstens einer Silikon-Außenschicht hergestellt nach einem Verfahren gemäß einem der vorhergehenden Ansprüche, **dadurch gekennzeichnet**, daß wenigstens drei Schichten vorgesehen sind, von denen die Außenschicht(4) aus Silikon besteht, an die eine Zwischenschicht(3) anschließt, die eingefärbt ist und an deren von der Silikonschicht abgewandten Seite eine weitere weiß eingefärbte Schicht(2) angeordnet ist.

6. Folie nach Anspruch 5, **dadurch gekennzeichnet**, daß beiderseits der weiß eingefärbten Schicht(Mittelschicht)(2) unterschiedlich eingefärbte Zwischenschichten(3,13,23) angeordnet sind, an die Silikonschichten(4,14) mit unterschiedlichen Eigenschaften anschließen.

## Claims

1. Process for the production of a film that is provided on at least one side with a silicone layer, **wherein** the film is produced by the coextrusion process and has at least three layers, the outer layer consisting of silicone under which a coloured intermediate layer is located, while a further layer that is preferably coloured white is provided on the side opposite the silicone layer.

2. Process according to claim 1, **wherein** a coloured intermediate layer that is covered on each of its outside surfaces with a silicone layer is provided on both sides of the layer which is coloured to be opaque and preferably white and which can be made from HDPE, PP or other suitable raw materials to improve heat resistance and tensile strength properties.

3. Process according to claim 2, **wherein** the two intermediate layers are pigmented to have different colours and the two outer layers contain silicone with different properties.

4. Process according to one of the claims 1 to 3, **wherein** the intermediate layer is printed.

5. Coextruded film with at least one silicone outer layer produced by a process in accordance with one of the previous claims, **wherein** at least three layers are provided, the outer layer (4) consisting of silicone, next to which a coloured intermediate layer (3) is provided, with a further white layer (2) located on the side opposite the silicone layer.

6. Film according to claim 5, **wherein** intermediate layers (3, 13, 23) of different colours are provided on both sides of the white layer (central layer) (2), while silicone layers (4, 14) with different properties are in turn located next to these intermediate layers.

## Revendications

1. Procédé pour fabriquer une feuille qui est pourvue d'une couche de silicone sur un côté au moins, caractérisé par le fait que la feuille est fabriquée par un procédé de coextrusion, et qu'elle comporte au moins trois couches parmi lesquelles une couche extérieure est constituée par de la silicone, couche sous laquelle est disposée une couche intermédiaire colorée, une autre couche, de préférence colorée en blanc, étant disposée sur le côté de celle-ci qui est opposé à la couche de silicone.

2. Procédé selon la revendication 1, caractérisé par le fait qu'une couche intermédiaire colorée qui est recouverte à chaque fois par une couche de silicone sur son côté extérieur est prévue des deux côtés de la couche qui est de préférence colorée en blanc d'une manière couvrante et qui peut être constituée par du polyéthylène à haute densité, du polypropylène ou d'autres matières premières appropriées en vue d'améliorer la résistance à la chaleur et la résistance à la traction.

3. Procédé selon la revendication 2, caractérisé par le fait que les deux couches intermédiaires sont colorées différemment, et que les deux couches extérieures contiennent des silicones dont les propriétés sont différentes.

4. Procédé selon l'une des revendications 1 à 3, caractérisé par le fait que la couche intermédiaire est imprimée.

5. Feuille coextrudée qui est pourvue d'au moins une couche extérieure en silicone et qui est fabriquée par un procédé selon l'une des revendications précédentes, caractérisée par le fait qu'il est prévu au moins trois couches parmi lesquelles la couche extérieure (4) est constituée par de la silicone, couche à laquelle se raccorde une couche intermédiaire (3) qui est colorée, une autre couche (2) colorée en blanc étant disposée sur le côté de celle-ci qui est opposé à la couche de silicone.

6. Feuille selon la revendication 5, caractérisée par le fait que des couches intermédiaires (3, 13, 23) qui sont colorées différemment et auxquelles se raccordent des couches de silicone (4, 14) dont les propriétés diffèrent sont disposées des deux côtés de la couche colorée en blanc (couche centrale) (2).
